# EUROPÄISCHE PATENTANMELDUNG

(11) **EP 2 317 198 A1**
(43) Veröffentlichungstag der Anmeldung: **04.05.2011**
(21) Anmeldenummer: 09405190.1
(22) Anmeldetag: 02.11.2009
(51) Int. Cl.: F16L 9/147, B32B 1/08, B29C 37/00, B29C 47/02

(54) **Rohr zur Führung von Wasser**

(71) Anmelder: R. Nussbaum AG, 4601 Olten (CH)
(72) Erfinder: Zeiter, Patrik, 4853 Riken AG (CH); Bobst, Urs, 4703 Kestenholz (CH)
(74) Vertreter: Rüfenacht, Philipp Michael

(57) **Zusammenfassung**

Die Erfindung betrifft ein formstabiles Rohr für Trinkwasserleitungen, welches aus einer ersten und einer zweiten Kunststoffschicht (11, 13; 21, 23; 31, 33; 41; 51; 61) besteht, wobei eine Metallschicht (12; 22; 32; 42; 52; 62) dazwischen angeordnet ist, welche dem Rohr die Formstabilität verleiht. Werden an ein solches Rohr Anschlussstücke mit Aussendichtung angeschlossen, so kommt die Metallschicht (12; 22; 32; 42; 52; 62) mit Wasser in Berührung und oxidiert, wodurch eine Delamination des Rohrs erfolgt. Damit dennoch Anschlussstücke mit Aussendichtung angeschlossen werden können, weist die Metallschicht (12; 22; 32; 42; 52; 62) beabstandete Bereiche (14; 24; 34; 44; 54; 64) auf, an deren Stelle die erste und die zweite Kunststoffschicht (11, 13; 21, 23; 31, 33; 41; 51; 61) direkt miteinander verbunden sind. Dadurch bleiben die erste und die zweite Kunststoffschicht (11, 13; 21, 23; 31, 33; 41; 51; 61) auch miteinander verbunden, wenn die Metallschicht (12; 22; 32, 42, 52; 62) aufgrund der Oxidation sich von der Kunststoffschicht (11, 13; 21, 23; 31, 33; 41; 51; 61) ablöst. Dadurch werden die Vorteile von formstabilen Rohren mit den Vorteilen eines Anschlussstückes mit Aussendichtung kombiniert.

## Beschreibung

Die Erfindung betrifft ein Rohr zur Führung von Wasser, umfassend mindestens eine erste und eine zweite Kunststoffschicht und mindestens eine Metallschicht, welche zwischen der ersten und der zweiten Kunststoffschicht aufgenommen ist. Die Erfindung betrifft weiter ein Verfahren zur Herstellung eines solchen Rohrs.

### Stand der Technik

Zurzeit sind für Trinkwasserleitungen im Wesentlichen drei Arten von Rohren bekannt: flexible Rohre aus Kunststoffen wie PEx, PVC, PB etc., formstabile Verbundrohre aus Kunststoff mit Metalleinlagen sowie starre Rohre aus INOX, Kupfer, verzinktem Stahl oder dergleichen. Flexible Rohre haben den Nachteil, dass sie elastisch sind und somit nach dem Ausrollen die Tendenz haben, wieder in die ursprüngliche Form zurückzukehren. Dies erschwert die Handhabung flexibler Rohre. Zudem benötigen flexible Rohre aufgrund ihrer Elastizität mehr Befestigungsstellen als andere Rohrtypen, damit eine gewünschte Rohrausrichtung beibehalten werden kann. Eine grössere Anzahl Befestigungsstellen verursacht höhere Kosten und akustische Probleme, da Schallwellen leicht über die Befestigungsstellen übertragen werden können.

Starre Rohre haben den Nachteil, dass sie oftmals zu starr sind und somit im Unterschied zu flexiblen oder formstabilen Rohre auch für kleine Richtungsänderungen zusätzliche Verbindungsstücke bzw. Winkelstücke benötigt werden. Zudem ist es aufwändiger, starre Rohre zu trennen, weil in der Regel anstelle einfacher Schneidewerkzeuge Metallsägen oder dergleichen benötigt werden. Deshalb sind Rohrleitungen mit starren Rohren teurer als solche mit flexiblen oder formstabilen Rohren.

Dem gegenüber besitzen formstabile Rohre gute Eigenschaften bezüglich der Handhabung. Ähnlich wie starre Rohre benötigen sie eine geringere Anzahl Befestigungsstellen als flexible Rohre, brauchen aber ebenfalls ähnlich wenige Verbindungsglieder bzw. Winkelstücke wie flexible Rohre, da kleine Richtungsänderungen ebenfalls durch leichtes Biegen der Rohre korrigiert werden können. Zudem sind formstabile Rohre wegen ihrer Formstabilität gut handhabbar. Deshalb werden vermehrt formstabile Rohre eingesetzt, insbesondere im Bereich von Trinkwasserleitungen.

Bekannte formstabile Rohre bestehen in der Regel aus zwei oder mehr Kunststoffschichten mit mindestens einer durchgehenden Metalleinlage dazwischen, welche dem Rohr die Formstabilität verleiht. Würden solche Rohre an Anschlussstellen aussen abgedichtet, d. h. mit Anschlussstücken mit Aussendichtung versehen, so kämen die Metallschichten am Rohrende mit Wasser in Kontakt und würden oxidieren. Dadurch haften die Kunststoffschichten nicht mehr an der Metallschicht. Die Folge wäre eine Delamination der Kunststoff-/ Metallschichten.

Bekannte formstabile Rohre haben somit den Nachteil, dass sie nicht mit Anschlussstücken mit Aussendichtung versehen werden können. Anschlussstücke mit Aussendichtung sind zurzeit nur für flexible oder starre Rohre bekannt; für formstabile Rohre können nur Anschlussstücke mit Innendichtung verwendet werden. Eine Innendichtung bedeutet aber eine Verkleinerung des Innendurchmessers des Rohrquerschnitts im Bereich des Anschlussstücks, was einen Druckabfall innerhalb der Rohrleitung zur Folge hat.

Die US 6,123,111 (Alfred Kärcher GmbH & Co.) beschreibt einen Hochdruckschlauch mit einem Anschlussstück mit einer Aussendichtung, wobei der Schlauch zur Verstärkung ein durchgehendes Drahtgeflecht oder Stoffgeflecht aufweist. Das Verstärkungselement befindet sich zwischen einem flexiblen Innenschlauch und einem Aussenschlauch aus elastischem Kunststoff. Das Anschlussstück ist über das Schlauchende gestülpt, wobei vorgängig sowohl ein Teil des Aussenschlauchs als auch des Verstärkungselements entfernt wurden. Die Abdichtung des Anschlussstücks erfolgt aussen am Innenrohr, mittels eines O-Rings, welcher sich in einer Ausnahme des Anschlussstücks befindet.

Die in der US 6,123,111 beschriebene Methode, ein Anschlussstück mit Aussendichtung an ein Rohr anzuschliessen, ist aufwändig, da zusätzliche Handlungen bei der Montage des Anschlussstücks notwendig sind. Zudem muss sichergestellt werden, dass die zu entfernenden Schichten leicht vom Innenschlauch entfernt werden können. Dies birgt aber die Gefahr, dass die Schichten sich auch ungewollt lösen, was allgemein eine Schwächung des Rohrs bedeutet. Die vorgeschlagene Methode mag somit für Hochdruckschläuche gangbar sein, ist aber für Trinkwasserleitungen nicht geeignet.

Die Druckschriften DE 1 158 774 (Adolf Rohde) und US 3,766,949 (Kleber-Colombes) beschreiben flexible Kunststoffrohre, welche mittels in die Rohrwand integrierten Metallfäden Formstabilität erlangen. Wie in der DE 1 158 774 gezeigt ist, können an solche Rohre ebenfalls Anschlusstücke mit Aussendichtung angeschlossen werden.

Metallfäden als Formstabilität verleihendes Element haben den Nachteil, dass diese relativ grosse Querschnitte aufweisen müssen. Dies wiederum erschwert das Trennen und somit die Handhabung solcher Rohre. Ist zudem der Draht in die Rohrwand integriert, so kann beim Biegen der Rohre aufgrund der dünnen Fläche der Draht in die benachbarten Schichten einschneiden, wodurch das Rohr beschädigt werden kann. Des Weiteren ist das Integrieren der Metallfäden in die Rohrwand aufwändiger als die Herstellung von üblichen mehrschichtigen Rohren.

### Darstellung der Erfindung

Aufgabe der Erfindung ist es, ein dem eingangs genannten technischen Gebiet zugehörendes mehrschichtiges, formstabiles Rohr zu schaffen, welches kostengünstig herstellbar ist und an welches ein Anschlussstück mit Aussendichtung angeschlossen werden kann, wobei eine Delamination unterbunden wird.

Die Lösung der Aufgabe ist durch die Merkmale des Anspruchs 1 definiert. Gemäss der Erfindung weist die Metallschicht eines Rohrs für eine Trinkwasserleitung mit einer ersten und eine zweiten Kunststoffschicht sowie mindestens einer Metallschicht, welche zwischen der ersten und der zweiten Kunststoffschicht aufgenommen ist, mehrere beabstandete Bereiche auf, in welchen die Metallschicht unterbrochen ist. Die erste und die zweite Kunststoffschicht sind nun in diesen mehreren beabstandeten Bereichen miteinander direkt verbunden.

Dadurch, dass die erste und die zweite Kunststoffschicht direkt miteinander verbunden sind, wird eine Delamination aufgrund der Oxidation der Metallschicht verhindert. Zwar kann sich die Verbindung zwischen der Metallschicht und der ersten beziehungsweise der zweiten Kunststoffschicht lokal lösen, sobald die Metallschicht oxidiert, die erste und die zweite Kunststoffschicht bleiben aber weiterhin miteinander an den beabstandeten Bereichen verbunden. Der räumliche Umfang der Delamination bleibt somit stark beschränkt und hat keinen Einfluss auf die Funktionalität des Rohrs. Somit können an erfindungsgemässen formstabilen Rohren Anschlussstücke mit Aussendichtungen angeschlossen werden, wodurch die Vorteile von formstabilen Rohren und Anschlussstücken mit Aussendichtung miteinander vereint sind.

Mit Vorteil ist die Metallschicht zusammenhängend. Zum Beispiel kann die Metallschicht als Metallfolie gleichmässig über eine Mantelfläche des Rohrs verteilt werden und beabstandete, insbesondere regelmässig verteilte, Durchbrüche aufweisen. Dies erleichtert die Herstellung der Rohre und ermöglicht eine homogene Verteilung der Formstabilität.

Alternativ kann die Metallschicht auch nicht zusammenhängend sein. Zum Beispiel indem die beabstandeten Bereiche ringförmig sind, wodurch die Metallschicht in einzelne Metallschichtbereiche getrennt wird. Es ist auch möglich, die Metallschicht durch unterbrochene Metallstreifen zu bilden, welche sich gegenseitig nicht berühren.

Mit Vorteil entspricht eine Fläche der beabstandeten Bereiche maximal 40 %, vorzugsweise 20 %, einer Fläche der Metallschicht. Dies ermöglicht einerseits eine ausreichend grosse Metallschicht für die Formstabilität des Rohrs, andererseits ist eine gute Verbindung zwischen der ersten und der zweiten Kunststoffschicht im Fall einer Ablösung der Metallschicht aufgrund einer Oxidation der Metallschicht sichergestellt.

Alternativ kann die Fläche der beabstandeten Bereiche auch höher als 40 % sein. Je grösser die beabstandeten Bereiche sind, desto dicker muss die Metallschicht sein, damit eine gleichbleibende Formstabilität beibehalten wird. Alternativ kann ein Material gewählt werden, welches bei gleicher Schichtdicke eine grössere Steifigkeit aufweist.

Vorzugsweise umfasst eine Querschnittsfläche rechtwinklig zu einer Rohrachse unabhängig von einem axialen Ort der Querschnittsfläche immer sowohl einen ersten Bereich oder erste Bereiche, in welchen die erste und die zweite Kunststoffschicht miteinander direkt verbunden sind, als auch einen zweiten Bereich oder zweite Bereiche, in welchen die Metallschicht vorhanden ist. Mit Vorteil sind der erste Bereich oder die ersten Bereiche und der zweite Bereich oder die zweiten Bereiche dabei gleichmässig über die Querschnittsfläche rechtwinklig zu einer Rohrachse verteilt. Dadurch hat man den Vorteil, dass unabhängig davon, wo das Rohr abgetrennt wird, die erste und die zweite Kunststoffschicht an der Endfläche verbunden sind. Dadurch ist ein guter Zusammenhalt des Rohrs auch bei der Endfläche gewährleistet.

Alternativ können die beabstandeten Bereiche derart angelegt sein, dass bei einem Schnitt durch das Rohr rechtwinklig zur Rohrachse entweder keine Ausdehnung der beabstandeten Bereiche oder keine Ausdehnung der Metallschicht vorhanden ist.

Mit Vorteil macht in der Querschnittsfläche die Ausdehnung der ersten Bereiche maximal 45%, bevorzugt 25%, der Querschnittsfläche aus. Dies hat den Vorteil, dass einerseits durch die ausreichend vorhandene Metallschicht die Formstabilität des Rohrs gewahrt wird.

Mit Vorteil beträgt ein axialer Abstand zwischen einem beliebigen der beabstandeten Bereiche und einem benachbarten beabstandeten Bereich maximal 10 mm, bevorzugt 5 mm. Dieser axiale Abstand definiert eine Delaminationstiefe, welche ein Mass dafür ist, wie stark sich zwei Schichten lösen können. Beträgt diese Delaminationstiefe maximal 10mm, bevorzugt 5mm, so ist ein guter Zusammenhalt der einzelnen Schichten gewährleistet.

Alternativ können auch grössere Abstände gewählt werden. Massgebend für die maximale, verantwortbare Delaminationstiefe ist die Art und Weise, wie die erste und die zweite Kunststoffschicht an den beabstandeten Bereichen miteinander verbunden sind.

Bei einer ersten bevorzugten Ausführungsform besteht die Metallschicht aus einer perforierten Metallfolie. Diese Metallfolie kann zum Beispiel schon vorgängig, vor dem Anbringen auf die erste Kunststoffschicht, perforiert werden. Die Perforation bildet die beabstandeten Bereiche der Metallfolie, wo die erste und die zweite Kunststoffschicht miteinander verbunden sind. Eine perforierte Metallfolie als Metallschicht vereinfacht die Herstellung des erfindungsgemässen Rohrs. Zudem ist es möglich, für eine jeweilige beabsichtigte Anwendung durch die Wahl einer geeigneten Form und Dimension der Perforation eine gewünschte Formstabilität zu erreichen.

Bei einer zweiten bevorzugten Ausführungsform besteht die Metallschicht aus Metallstreifen. Dabei können die Metallstreifen sowohl quasi endlose Metallstreifen sein als auch in ihrer Länge begrenzte Metallstreifen. Die Metallstreifen haben den Vorteil, dass diese bei der Herstellung der Rohre in vielfältiger Weise um die erste Kunststoffschicht gewickelt werden können. Insbesondere ist es möglich, auf eine Perforation der Metallstreifen zu verzichten und stattdessen die Metallstreifen mit Abständen um die erste Kunststoffschicht zu wickeln. Die Abstände ergeben dann die beabstandeten Bereiche für die Verbindung der ersten und der zweiten Kunststoffschicht.

Metallstreifen und perforierte Metallfolien sind zwei vorteilhafte, alternative Möglichkeiten einer erfindungsgemässen Metallschicht. Anstelle einer Metallfolie oder Metallstreifen kann die Metallschicht auch direkt auf die erste Kunststoffschicht extrudiert werden.

Mit Vorteil sind die Metallstreifen schraubenförmig um die erste Kunststoffschicht angeordnet. Dabei können sich einzelne Windungen der Metallstreifen berühren oder sogar überlappen. Dadurch entsteht eine zusammenhängende Metallschicht. Die beabstandeten Bereiche entstehen dann dadurch, dass die Metallstreifen nicht quasi als Endlosband um die erste Kunststoffschicht angeordnet sind, sondern in Abständen unterbrochen sind. Es ist aber auch möglich, dass die beabstandete Bereiche durch Lücken zwischen den einzelnen Windungen entstehen.

Ebenfalls vorteilhaft ist es, die Metallstreifen geflechtartig um die erste Kunststoffschicht anzuordnen. Die beabstandeten Bereiche entstehen dann, indem zwischen den Windungen Lücken vorhanden sind.

Sowohl das geflechtartige als auch das schraubenförmige Umwickeln der Metallstreifen um die erste Kunststoffschicht haben den Vorteil, dem Rohr eine homogene Formstabilität zu verleihen. Zudem ist es möglich, bei der Herstellung der Rohre durch Ändern der Anordnung der einzelnen Windungen die Formstabilität des Rohrs den Bedürfnissen anzupassen.

Alternativ können die Metallstreifen ringförmig um die erste Kunststoffschicht angelegt sein.

Mit Vorteil ist eine Sauerstoffsperrschicht, insbesondere aus EVOH, vorhanden. Dadurch gelangt weniger Sauerstoff zur Metallschicht. Dies vermindert das Oxidieren der Metallschicht und beugt somit zusätzlich einer Ablösung der Metallschicht von der ersten und/oder der zweiten Kunststoffschicht vor.

Die Sauerstoffsperrschicht kann an verschiedenen Orten eingefügt werden. So ist es möglich, die Sauerstoffsperrschicht zwischen der Metallschicht und der zweiten Kunststoffschicht oder aussen an der zweiten Kunststoffschicht anzubringen. Vorteilhaft ist es auch, die Sauerstoffsperrschicht in eine der Kunststoffschichten, insbesondere in der zweiten Kunststoffschicht, zu integrieren. Allgemein ist es vorteilhaft, die Sauerstoffsperrschicht weiter aussen als die Metallschicht anzubringen.

Anstelle von EVOH als Sauerstoffsperrschicht können auch beispielsweise Ethylenvinylalkohol (EVAL) oder Butyl verwendet werden. Alternativ kann auch auf eine solche Sauerstoffsperrschicht verzichtet werden, insbesondere wenn als Material für die Metallschicht ein nicht rostendes Metall, zum Beispiel INOX, gewählt wird.

Mit Vorteil besteht die Metallschicht aus Aluminium oder aus INOX (nichtrostendem Stahl). Beide Materialen besitzen gute formstabilisierende Eigenschaften. Dabei ist es auch möglich, dass die Metallschicht aus mehreren, unterschiedlichen Metallen zusammengesetzt ist.

Alternativ können andere Metalle oder Metall-Legierungen, wie zum Beispiel Kupfer oder Bronze verwendet werden.

Mit Vorteil bestehen die erste und die zweite Kunststoffschicht aus unterschiedlichen Materialen. Dadurch können verschiedene gewünschte Eigenschaften der einzelnen Kunststoffe in demselben Rohr vereint werden.

Alternativ können die erste und die zweite Kunststoffschicht auch aus dem gleichen Material bestehen.

Die Herstellung eines erfindungsgemässen Rohrs erfolgt vorzugsweise, indem eine stellenweise unterbrochene Metallschicht, insbesondere eine vorgängig perforierte

Metallfolie, mit einer ersten Kunststoffschicht koextrudiert wird und danach eine zweite Kunststoffschicht auf die Metallschicht respektive erste Kunststoffschicht aufgebracht wird.

Mit Vorteil wird die zweite Kunststoffschicht auf die Metallschicht und erste Kunststoffschicht aufgetragen, solange die erste Kunststoffschicht noch warm ist, das heisst, solange die erste Kunststoffschicht noch verformbar beziehungsweise noch adhäsiv genug ist, dass sie sich mit der zweiten Kunststoffschicht verbinden kann. Auf diese Art und Weise lassen sich die erste und die zweite Kunststoffschicht ohne Zufügen eines Adhäsionsmittels und eines zusätzlichen Arbeitsschritts miteinander verbinden.

Alternativ kann die zweite Kunststoffschicht mittels eines Adhäsionsmittels, zum Beispiel mittels eines Klebstoffs, mit der ersten Kunststoffschicht verbunden werden. Dabei kann das Adhäsionsmittel derart aufgebracht werden, dass auch die Metallschicht mit der ersten und der zweiten Kunststoffschicht verbunden wird. Es ist ebenfalls vorstellbar, dass die beabstandeten Bereiche nachträglich noch einmal erwärmt werden, so dass die erste und die zweite Kunststoffschicht thermisch miteinander verbunden werden.

Aus der nachfolgenden Detailbeschreibung und der Gesamtheit der Patentansprüche ergeben sich weitere vorteilhafte Ausführungsformen und Merkmalskombinationen der Erfindung.

### Kurze Beschreibung der Zeichnungen

Die zur Erläuterung des Ausführungsbeispiels verwendeten Zeichnungen zeigen:
- Fig. 1: einen Schnitt entlang einer Rohrachse eines erfindungsgemässen formstabilen Rohrs mit unterbrochener Metallschicht;
- Fig. 2: eine Detaildarstellung einer Verbindungsstelle einer ersten Ausführungsform;
- Fig. 3a: eine Detaildarstellung einer Verbindungsstelle einer ersten Variante einer zweiten Ausführungsform
- Fig. 3b: eine Detaildarstellung einer Verbindungsstelle einer zweiten Variante der zweiten Ausführungsform;
- Fig. 3c: eine Detaildarstellung einer Verbindungsstelle einer dritten Variante der zweiten Ausführungsform;
- Fig. 4: eine Aufsicht auf eine erste Kunststoffschicht mit perforierter Metallfolie;
- Fig. 5: eine Aufsicht auf eine erste Kunststoffschicht mit Metallstreifen; und
- Fig. 6: eine Aufsicht auf eine erste Kunststoffschicht mit perforierter Metallfolie.

Grundsätzlich sind in den Figuren gleiche Teile mit gleichen Bezugszeichen versehen.

### Wege zur Ausführung der Erfindung

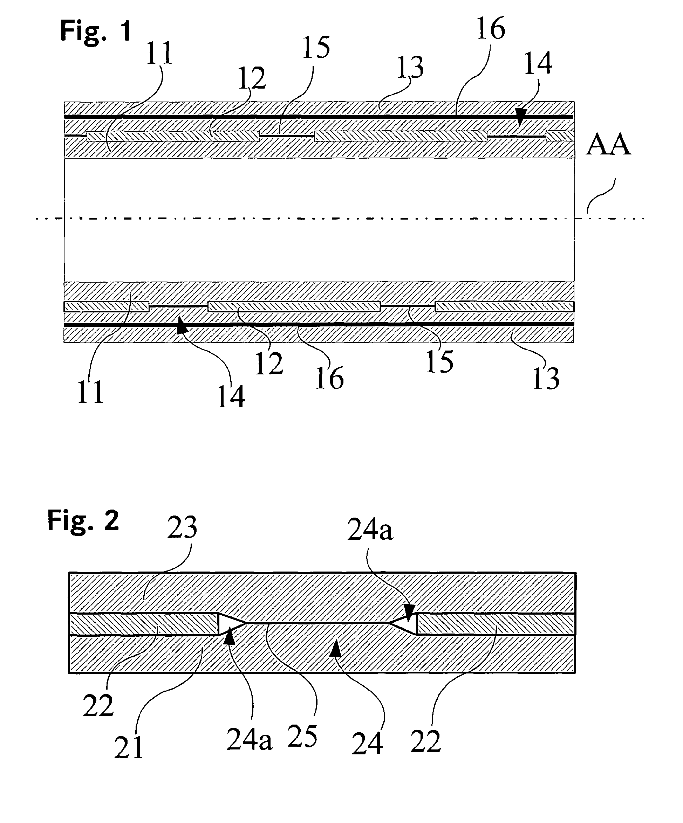

Die Figur 1 zeigt eine vereinfachte Darstellung eines Schnitts entlang einer Rohrachse AA eines erfindungsgemässen formstabilen Rohrs. Das Rohr besteht aus einer ersten (inneren) rohrförmigen Kunststoffschicht aus PEx. Darüber ist aussen eine perforierte Metallschicht 12 aus Aluminium aufgebracht. Danach folgt aussen eine zweite Kunststoffschicht 13 aus PE. Eine Dicke der ersten Kunststoffschicht 11 beträgt 2.4 mm, eine Dicke der zweiten Kunststoffschicht 13 0.45 mm. Die Metallschicht 12 weist eine Dicke von 0.30 mm auf. Aufgrund der Perforation in der Metallschicht 12 entstehen beabstandete Bereiche 14 in der Metallschicht 12, in welchen die erste und die zweite Kunststoffschicht 11, 13 durch eine feste Verbindung 15 miteinander verbunden sind.

Die Herstellung des Rohrs erfolgt, indem zuerst die erste Kunststoffschicht 11 als Innenrohr extrudiert wird und anschliessend die perforierte Metallschicht 12 aufgetragen wird. Dabei ist die Metallschicht 12 als Folie vorhanden, welche um die noch warme erste Kunststoffschicht 11 gelegt wird. Dabei wird die rohrförmige erste Kunststoffschicht 11 über die ausgebreitete Metallschicht 12 geführt. Danach werden seitliche Ränder der Metallschicht 12 um das Innenrohr bzw. erste Kunststoffschicht 11 gelegt und mittels eines Laserstrahls verschweisst. Die Perforation der Metallschicht kann derart ausgebildet sein, dass an den seitlichen Rändern keine Perforationen vorhanden sind. Falls die seitlichen Ränder der Metallschicht 12 ebenfalls Perforationen aufweisen, so ist beim Verschweissen der seitlichen Rändern der Metallschicht mit dem Laserstrahl darauf zu achten, dass der Laserstrahl entsprechend ein- bzw. ausgeschaltet wird.

In der zweiten Kunststoffschicht 13 ist zudem eine Sauerstoffsperrschicht 16 aus EVOH integriert. Diese Sauerstoffsperrschicht 16 verhindert das Durchdringen von Sauerstoff zur Metallschicht 12, wodurch eine Oxidation der Metallfolie 12 gebremst wird.

Die Figur 2 zeigt eine Detailansicht einer erfindungsgemässen Rohrwand einer ersten Ausführungsform mit einem beabstandeten Bereich 24 in der Metallschicht 22. Eine erste und eine zweite Kunststoffschicht 21, 23 berühren sich im beabstandeten Bereich 24 und bilden eine feste Kunststoffverbindung 25. Wie dies in der Figur 2 dargestellt ist, füllt aufgrund der Plastizität der ersten und der zweiten Kunststoffschicht 21, 23 und der Dicke der Metallschicht 22 die feste Kunststoffverbindung 25 nicht den gesamten beabstandeten Bereich 24 aus, sondern an einem Rand des beabstandeten Bereichs 24a ist keine feste Kunststoffverbindung 25 vorhanden.

Die in der Figur 2 dargestellte Kunststoffverbindung 25 entsteht, indem die erste Kunststoffschicht 21 zusammen mit der perforierten Metallschicht 22 koextrutiert wird. Solange die erste Kunststoffschicht 21 noch warm ist, wird die zweite Kunststoffschicht 23 darüber extrudiert, wobei die erste Kunststoffschicht 21 sich gleichzeitig mit der zweiten Kunststoffschicht 23 im beabstandeten Bereich 24 verbindet. Alternativ oder zusätzlich kann die Metallschicht 12a durch magnetische Induktion erwärmt werden, wodurch die Kunststoffschicht ebenfalls mit der Metallschicht verbunden wird. Des Weiteren kann unterstützend ein Adhäsionsmittel wie LLDPE die Verbindung verstärken. Das Adhäsionsmittel kann dabei auch nur partiell an jenen Stellen aufgetragen werden, wo eine permanente feste Verbindung gewünscht ist.

Anstelle einer direkten Kunststoffverbindung 25 zwischen der ersten und der zweiten Kunststoffschicht 21, 23 können in einer zweiten Ausführungsform eine erste und eine zweite Kunststoffschicht 31, 33 mittels eines Adhäsionsmittels 35 verbunden sein. Ein mögliches Adhäsionsmittel ist zum Beispiel lineares Polyethylen niederer Dichte (LLDPE). Je nach verwendetem Adhäsionsmittel 35 gibt es verschiedene Varianten, wie eine Verbindung zwischen der ersten und der zweiten Kunststoffschicht 31, 33 hergestellt werden kann.

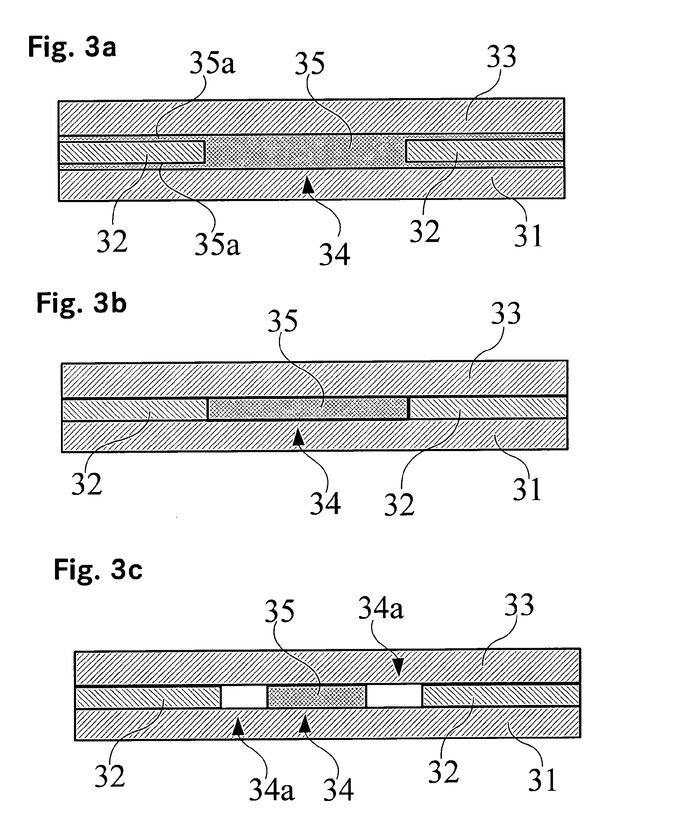

Die Figur 3a zeigt eine erste Variante der zweiten Ausführungsform, bei der das Adhäsionsmittel 35 nicht nur beabstandete Bereiche 34 einer Metallschicht 32 ausfüllt und somit die erste Kunststoffschicht 31 mit der zweiten Kunststoffschicht 33 verbindet, sondern bei der das Adhäsionsmittel 35 auch in einem Bereich 35a zwischen der Metallschicht 32 und der ersten Kunststoffschicht 31 und/oder der zweiten Kunststoffschicht 33 aufgebracht wird. Dazu wird zuerst die erste Kunststoffschicht 31 extrudiert, danach wird das Adhäsionsmittel 35 auf die erste Kunststoffschicht 31 aufgetragen und die Metallschicht 32 darüber aufgebracht. Nun wird das Adhäsionsmittel 35 auf eine äussere, der ersten Kunststoffschicht gegenüberliegenden Seite der Metallfolie 32, aufgetragen, wobei sichergestellt wird, dass die beabstandeten Bereiche 34 ebenfalls mit dem Adhäsionsmittel 35 gefüllt werden, so dass beim Aufbringen der zweiten Kunststoffschicht 33 eine Klebverbindung 35 zwischen der ersten und der zweiten Kunststoffschicht 31, 33 entsteht.

Die Figur 3b zeigt eine zweite Variante der zweiten Ausführungsform, bei der zwischen der Metallschicht 32 und der ersten und der zweiten Kunststoffschicht 31, 33 das Adhäsionsmittel 35 nicht vorhanden ist. Dazu wird die Metallschicht 32 ohne Adhäsionsmittel 35 auf die erste Kunststoffschicht 31 aufgebracht beziehungsweise gewickelt. Dies kann ebenfalls gleichzeitig mit dem Extrudieren der ersten Kunststoffschicht 31 geschehen. Danach wird das Adhäsionsmittel 35 nur in die beabstandeten Bereiche 34 der Metallschicht 32 auf die erste Kunststoffschicht 31 aufgebracht, wobei das Adhäsionsmittel 35 jeweils den ganzen beabstandeten Bereich 34 ausfüllt.

Die Figur 3c zeigt eine Detailansicht einer dritten Variante der zweiten Ausführungsform. Im Unterschied zur zweiten Variante wird bei dieser Variante nicht der ganze beabstandete Bereich 34 mit dem Adhäsionsmittel 35 ausgefüllt, sonder nur einen Teil, so dass ein Rand 34a des beabstandeten Bereichs 34 kein Adhäsionsmittel 35 enthält.

Es gibt verschiedene Möglichkeiten, die Metallschicht auszugestalten. Insbesondere kann die Metallschicht sowohl als Metallfolie als auch als Metallstreifen ausgebildet sein. Beiden Varianten ist gemeinsam, dass sie ab Spulen beziehungsweise Rollen abgerollt und um eine erste Kunststoffschicht gewickelt werden können. Zudem sind Metallfolien und Metallstreifen ähnlich dünn. Ein Unterschied besteht hinsichtlich einer flächenhaften Ausdehnung. So ist eine Metallfolie eher flächenhaft und enthält Perforierungen unterschiedlicher Ausprägung. Metallstreifen demgegenüber haben eine eher langgezogene Form, sie können insbesondere quasi als Endlosband ausgebildet sein, mit einer im Vergleich zu einer Folie kleinen Breite.

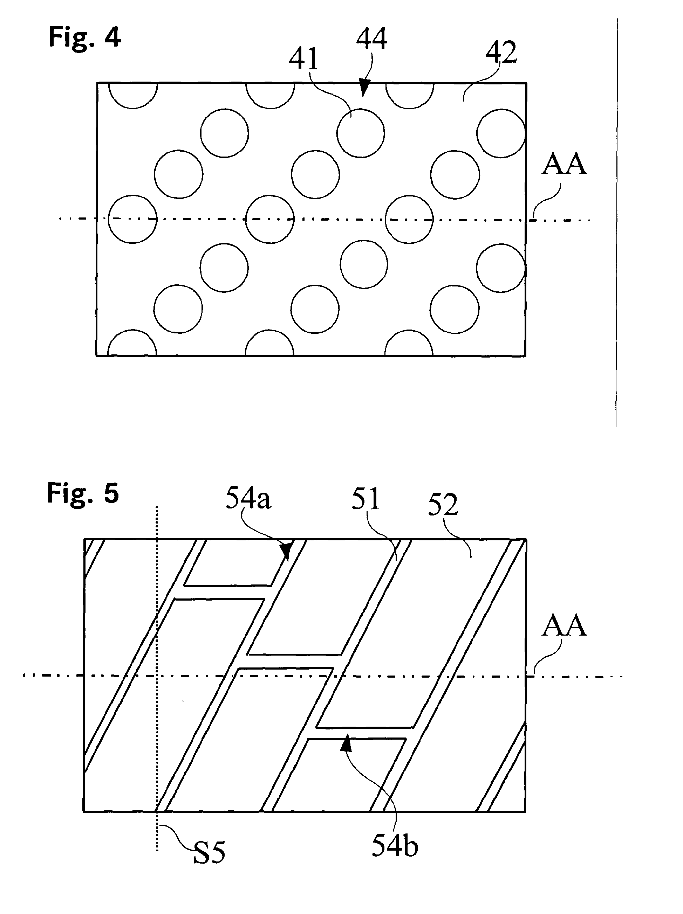

Die Figur 4 zeigt eine Aufsicht einer perforierten Metallfolie 42 auf einer ersten Kunststoffschicht 41. Dabei besteht die Perforation aus gleichmässig angeordneten Löchern 44, welche beabstandete Bereiche der Metallfolie bilden. Die Löcher 44 mit einen Radius von 1.4 mm sind entlang spiralförmigen Linien mit einem Neigungswinkel von 45° verteilt und haben einen Abstand von Lochmittelpunkt zu Lochmittelpunkt entlang der spiralförmigen Linien von 3.5mm. Dies entspricht einem Abstand von Lochmittelpunkt zu Lochmittelpunkt von 12.5 mm in Richtung der Rohrachse AA beziehungsweise senkrecht zur Rohrachse AA. Somit beträgt die maximale Delaminationstiefe, also der maximale Abstand zweier Löcher in Richtung der Rohrachse AA, 10 mm. Bei einem Aussenrohrdurchmesser von 20 mm des Rohrs, entspricht eine Gesamtfläche der Löcher 44 circa 19.5% einer Aussenmantelfläche des Rohrs.

Die Löcher 44 können vor dem Aufbringen der Metallfolie 42 auf die erste Kunststoffschicht 41 aus der Metallfolie 42 ausgeschnitten oder ausgestanzt werden. Es ist aber auch möglich, die Löcher 44 nach dem Aufbringen der Metallfolie 42 auf die erste Kunststoffschicht 41 aus der Metallfolie 42 auszuschneiden.

Die Figur 5 zeigt die Metallschicht als einzelne Metallstreifen 52, welche spiralförmig um die erste Kunststoffschicht 51 angebracht sind. Dabei sind die Metallstreifen 52 derart aufgebracht, dass sowohl zwischen einzelnen Windungen der Metallstreifen 52 eine Lücke 54a als auch zwischen den einzelnen Metallstreifen 52 ein Abstand 54b entsteht. Ein Neigungswinkel der Metallstreifen beträgt 60°. Die erste Kunststoffschicht 51 und eine zweite Kunststoffschicht (in der Figur 5 nicht gezeichnet) werden dann in den Lücken 54a beziehungsweise in den Abständen 54b mit einander verbunden, wobei insbesondere sowohl eine direkte Kunststoffverbindung als auch eine Klebverbindung mittels eines Adhäsionsmittels möglich sind. Eine Breite der Lücke 54a beträgt 1 mm eine Breite des Abstands 54b beträgt 2 mm, womit auch die Delaminationstiefe angegeben ist. Bei einer Breite von 5 mm und einer Länge von 60 mm der Metallstreifen 52 entspricht eine Gesamtfläche des beabstandeten Bereichs circa 19 % einer Aussenmantelfläche des Rohrs. Bei einem beliebigen Schnitt durch das Rohr rechtwinklig zur Rohrachse AA beträgt eine Ausdehnung der beabstandeten Bereiche circa 16% der gesamten Endfläche des Rohrs. Aufgrund der besonderen Anordnung der beabstandeten Bereiche werden bei einem beliebigen Schnitt durch das Rohr rechtwinklig zur Rohrachse AA immer auch mehrere beabstandete Bereiche getroffen, wodurch ein guter Zusammenhalt des Rohrs auch an dessen Endfläche gewährleistet ist.

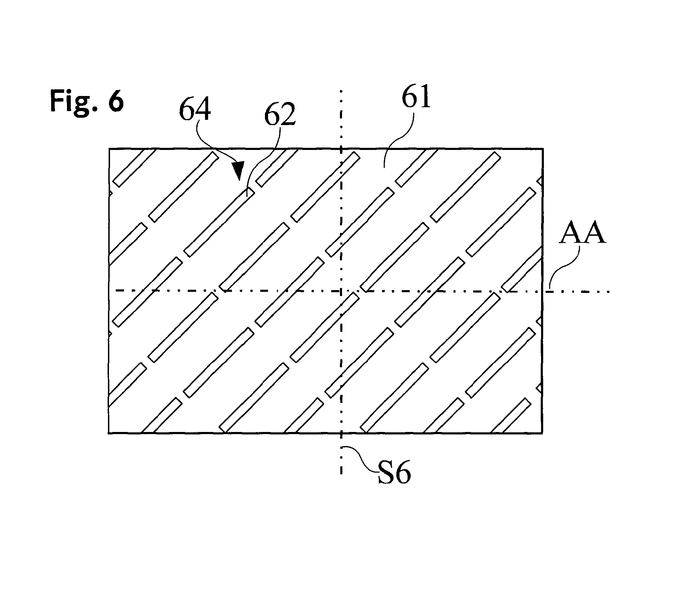

Die Figur 6 zeigt eine weitere Variante eines erfindungsgemässen Rohrs mit einer perforierten Metallschicht 62, wobei die Perforation aus Rechtecken 64 mit einer Länge von 5.9mm und einer Breite von 2mm besteht, die längsseitig bzw. unter einem Winkel von 45° entlang der Rohrache AA ausgerichtet sind. Analog zum Ausführungsbeispiel der Figur 4 sind Mittelpunkte der Rechtecke 64 auf spiralförmigen Linien mit einem Winkel von 45° zur Rohrachse AA angeordnet. Ein Abstand der Mittelpunkte der Rechtecken 64 entlang der spiralförmigen Linien beträgt4.45 mm und ein Abstand der Mittelpunkte der Rechtecken 64 rechtwinklig zur zu den spiralförmigen Linien beträgt 8.9 mm. Zudem sind die Rechtecke 64 derart versetzt zueinander angeordnet, dass ein jeglicher Schnitt S6 rechtwinklig zur Rohrachse AA auch immer Rechtecke 64 trifft, wobei eine Ausdehnung der Rechtecke 64 entlang des Schnittes S6 maximal 33.8% der Endfläche beträgt. Eine Gesamtfläche der Rechtecke 64 beträgt 11.3% einer Aussenmantelfläche des Rohrs.

In den Ausführungsbeispielen besteht das erfindungsgemässe Rohr nur aus den drei Schichten erste Kunststoffschicht, Metallschicht und zweite Kunststoffschicht und je nach Variante zusätzlich noch aus einer Schicht Adhäsionsmittel und/oder einer Sauerstoffsperrschicht. Die Erfindung erstreckt sich aber auch auf Verbundrohre, die aus mehr als den genannten Schichten bestehen. So können sowohl zusätzliche Kunststoffschichten als auch Metallschichten vorhanden sein, wobei die Metallschichten erfindungsgemäss beabstandete Bereiche aufweisen, wo eine feste Verbindung zwischen den benachbarten Kunststoffschichten besteht.

Neben dem erwähnten Materialien PE und PEx können die Kunststoffschichten auch aus PE-RT, PVC, PB etc. bestehen. Anstelle von Aluminium oder INOX kann die Metallschicht auch aus anderen Metallen beziehungsweise Metalllegierungen wie Kupfer oder Bronze bestehen. Dabei können die einzelnen Kunststoffschichten und Metallschichten des erfindungsgemässen Rohrs sowohl aus dem gleichen Kunststoff beziehungsweise Metall als auch aus verschiedenen Kunstoffen oder Metallen bestehen.

Die Schichtdicken der einzelnen Kunststoff- und Metallschichten können variieren. Sie werden vorwiegend durch die Dimension und den Anwendungsbereich des erfindungsgemässen Rohrs bestimmt.

Dasselbe gilt auch für die Form und Dimension der beabstandeten Bereiche der Metallschicht. Diese werden ebenfalls vorwiegend durch die Dimension und den Anwendungsbereich des erfindungsgemässen Rohrs bestimmt. Dabei können in derselben Metallschicht beabstandete Bereiche mit unterschiedlichen Formen und Dimensionen vorkommen.

Die Vernetzung der ersten Kunststoffschicht kann sowohl noch vor als auch nach dem Aufbringen der zweiten Kunststoffschicht erfolgen. Erfolgt die Vernetzung nach dem Aufbringen der zweiten Kunststoffschicht, so kann die zweite Kunststoffschicht zusammen mit der ersten Kunststoffschicht vernetzt werden. Das heisst zuerst werden sowohl die erste als auch die zweite Kunststoffschicht aus PE extrudiert, danach erfolgt das gemeinsame Vernetzen der beiden Schichten, indem sie einer Strahlung ausgesetzt werden. Dies hat zur Folge, dass an den beabstandeten Bereichen die Verbindung zwischen der ersten und der zweiten Kunststoffschicht verstärkt wird. Wird insbesondere kein Adhäsionsmittel gebraucht, ist das gleichzeitige Vernetzen der ersten und der zweiten Kunststoffschicht eine effiziente Methode, diese beiden Schichten an den beabstandeten Bereichen miteinander zu verbinden.

Mögliche lineare Polyethylene niederer Dichte (LLDPE) als Adhäsionsmittel zum Verbinden von Kunstoffen bzw. von Kunststoffen mit Metallen sind zum Beispiel anhydridgetropfte Copolymere.

Zusammenfassend ist festzustellen, dass ein mehrschichtiges formstabiles Rohr geschaffen wurde, an welches ein Anschlussstück mit Aussendichtung angeschlossen werden kann, wobei eine Delamination unterbunden wird.

## Patentansprüche

1. Rohr zur Führung von Wasser umfassend mindestens eine erste und eine zweite Kunststoffschicht (11, 13; 21, 23; 31, 33; 41; 51; 61) und mindestens eine Metallschicht (12; 22; 32; 42; 52; 62), welche zwischen der ersten und der zweiten Kunststoffschicht (11, 13; 21, 23; 31, 33; 41; 51; 61) aufgenommen ist, **dadurch gekennzeichnet, dass** die Metallschicht (12; 22; 32; 42; 52; 62) mehrere beabstandete Bereiche (14; 24; 34; 44; 54) aufweist, in welchen die Metallschicht (12; 22; 32; 42; 52; 62) unterbrochen ist und dass in diesen mehreren beabstandeten Bereichen (14; 24; 34; 44; 54; 64) die erste und die zweite Kunststoffschicht (11, 13; 21, 23; 31, 33; 41; 51; 61) miteinander direkt verbunden sind.

2. Rohr nach Anspruch 1, **dadurch gekennzeichnet, dass** die Metallschicht (12; 22; 32; 42; 52; 62) zusammenhängend ist.

3. Rohr nach einem der Ansprüche 1 oder 2, **dadurch gekennzeichnet, dass** eine Fläche der beabstandeten Bereiche (14; 24; 34; 44; 54; 64) maximal 40 %, vorzugsweise 20 %, einer Fläche der Metallschicht (12; 22; 32; 42; 52; 62) entspricht.

4. Rohr nach einem der Ansprüche 1 bis 3, **dadurch gekennzeichnet, dass** eine Querschnittsfläche rechtwinklig zu einer Rohrachse (AA) unabhängig von einem axialen Ort der Querschnittsfläche immer sowohl einen ersten Bereich oder erste Bereiche umfasst, in welchen die erste und die zweite Kunststoffschicht (11, 13; 21, 23; 31, 33; 41; 51; 61) miteinander direkt verbunden sind, als auch einen zweiten Bereich oder zweite Bereiche, in welchen die Metallschicht (12; 22; 32; 42; 52; 62) vorhanden ist.

5. Rohr nach Anspruch 5, **dadurch gekennzeichnet, dass** in der Querschnittsfläche die Ausdehnung der ersten Bereiche (14; 24; 34; 44; 54; 64) maximal 45%, bevorzugt 25%, der Querschnittsfläche ausmacht.

6. Rohr nach einem der Ansprüche 1 bis 5, **dadurch gekennzeichnet, dass** ein axialer Abstand zwischen einem beliebigen der beabstandeten Bereiche (14; 24; 34; 44; 54; 64) und einem benachbarten beabstandeten Bereich maximal 10 mm, bevorzugt 5 mm, beträgt.

7. Rohr nach einem der Ansprüche 1 bis 6, **dadurch gekennzeichnet, dass** die Metallschicht (12; 22; 32; 42; 52; 62) durch eine perforierte Metallfolie (42) gebildet ist.

8. Rohr nach einem der Ansprüche 1 bis 6, **dadurch gekennzeichnet, dass** die Metallschicht (12; 22; 32; 42; 52; 62) aus Metallstreifen (52) besteht.

9. Rohr nach Anspruch 8, **dadurch gekennzeichnet, dass** die Metallstreifen (52) schraubenförmig um das Rohr angeordnet sind.

10. Rohr nach Anspruch 8, **dadurch gekennzeichnet, dass** die Metallstreifen (52) geflechtartig um das Rohr angeordnet sind.

11. Rohr nach einem der Ansprüche 1 bis 10, **dadurch gekennzeichnet, dass** zusätzlich eine Sauerstoffsperrschicht (16), insbesondere aus EVOH, vorhanden ist.

12. Rohr nach einem der Ansprüche 1 bis 11, **dadurch gekennzeichnet, dass** die Metallschicht (12; 22; 32; 42; 52; 62) aus INOX besteht.

13. Rohr nach einem der Ansprüche 1 bis 11, **dadurch gekennzeichnet, dass** die Metallschicht (12; 22; 32; 42; 52; 62) aus Aluminium besteht.

14. Rohr nach einem der Ansprüche 1 bis 13, **dadurch gekennzeichnet, dass** die erste und die zweite Kunststoffschicht (11, 13; 21, 23; 31, 33; 41; 51) aus verschiedenen Materialien bestehen.

15. Verfahren zur Herstellung eines Rohrs gemäss einer der Ansprüche 1 bis 14, wobei eine stellenweise unterbrochene Metallschicht (12; 22; 32, 42, 52; 62) mit einer ersten Kunststoffschicht (11; 21; 31; 41; 51; 61) koextrudiert wird und danach eine zweite Kunststoffschicht (13; 23; 33) auf die unterbrochene Metallschicht (12; 22; 32, 42, 52; 62) aufgebracht wird.

16. Verfahren nach Anspruch 15, **dadurch gekennzeichnet, dass** die zweite Kunststoffschicht (13; 23; 33) auf die unterbrochene Metallschicht (12; 22; 32, 42, 52; 62) und erste Kunststoffschicht (11; 21; 31; 41; 51; 61) aufgetragen wird, solange die erste Kunststoffschicht (11; 21; 31; 41; 51; 61) noch verformbar beziehungsweise noch adhäsiv genug ist, dass sie sich mit der zweiten Kunststoffschicht (13; 23; 33) verbinden kann.

17. Verfahren nach einem der Ansprüche 15 oder 16, **dadurch gekennzeichnet, dass** die Metallschicht (12; 22; 32; 42; 52; 62) durch eine Metallfolie (42) gebildet wird, welche vorgängig perforiert wird.
